# EUROPEAN PATENT APPLICATION

(11) **EP 4 442 656 A1**
(43) Date of publication of application: **09.10.2024**
(21) Application number: 22898698.0
(22) Date of filing: 28.11.2022
(51) Int. Cl.: C03B 37/027, G01M 11/00, G02B 6/02

(54) **METHOD FOR MEASURING TWIST OF OPTICAL FIBER AND METHOD FOR MANUFACTURING OPTICAL FIBER**

(30) Priority: 29.11.2021 JP 2021192877
(71) Applicant: SUMITOMO ELECTRIC INDUSTRIES, LTD., Osaka-shi, Osaka 541-0041 (JP)
(72) Inventor: OKAZAKI, Iwao, Osaka-shi, Osaka 541-0041 (JP); ENOMOTO, Tadashi, Osaka-shi, Osaka 541-0041 (JP); KOHDA, Hiroshi, Osaka-shi, Osaka 541-0041 (JP)
(74) Representative: Müller-Boré & Partner Patentanwälte PartG mbB
(86) International application number: PCT/JP2022/043812
(87) International publication number: WO 2023/095916

(57) **Abstract**

A method for measuring a twist of an optical fiber is a method for measuring the twist of an optical fiber being drawn. The method includes irradiating the optical fiber with light beams from a plurality of irradiation positions spaced apart along a traveling direction of the optical fiber; detecting intensity distributions of the light beams, with which the optical fiber is irradiated and which are transmitted through the optical fiber, at a plurality of detection positions corresponding to the plurality of irradiation positions; and calculating the twist of the optical fiber based on the intensity distributions which are detected.

## Description

### Technical Field

The present disclosure relates to a method for measuring a twist of an optical fiber and a method for manufacturing an optical fiber. The present application claims priority to Japanese Patent Application No. 2021-192877 filed on November 29, 2021, and the entire contents of the Japanese patent application are incorporated herein by reference.

### Background Art

Patent Literature 1 discloses a method for measuring a twist of an optical fiber. In this method, an eccentricity of the fiber is determined as a concentricity of the fiber which is a function of a position of the fiber in a length direction, and the twist of the optical fiber is determined from the concentricity of the fiber.

### Citation List

### Patent Literature

Patent Literature 1: JP 2004-233364 A

### Summary of Invention

A method for measuring a twist of an optical fiber according to an aspect of the present disclosure is a method for measuring the twist of an optical fiber being drawn. The method includes irradiating the optical fiber with light beams from a plurality of irradiation positions spaced apart along a traveling direction of the optical fiber; detecting intensity distributions of the light beams, with which the optical fiber is irradiated and which are transmitted through the optical fiber, at a plurality of detection positions corresponding to the plurality of irradiation positions; and calculating the twist of the optical fiber based on the intensity distributions which are detected.

A method for manufacturing an optical fiber according to an aspect of the present disclosure includes melting an optical fiber preform by heating to draw an optical fiber; measuring a twist of the optical fiber being drawn; and applying a twist that cancels the measured twist to the optical fiber being drawn. The measuring step includes irradiating the optical fiber with light beams from a plurality of irradiation positions spaced apart along a traveling direction of the optical fiber, detecting intensity distributions of light beams, with which the optical fiber is irradiated and which are transmitted through the optical fiber, at a plurality of detection positions corresponding to the plurality of irradiation positions, and calculating the twist of the optical fiber based on the intensity distributions which are detected.

### Brief Description of Drawings

FIG. 1 is a schematic diagram of a manufacturing apparatus used in a method for manufacturing an optical fiber according to an embodiment.
FIG. 2 is a flowchart illustrating the method for manufacturing an optical fiber according to the embodiment.
FIG. 3 is a flowchart illustrating a measuring step.
FIG. 4 is an explanatory diagram of a calculating step.

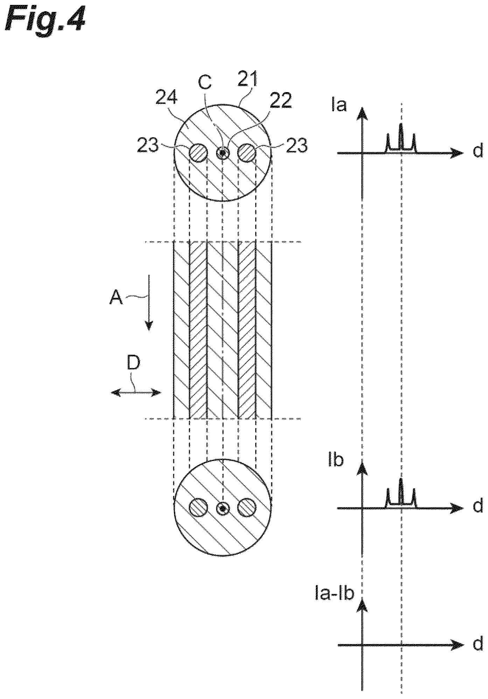

FIG. 4 is an explanatory diagram of the calculating step.

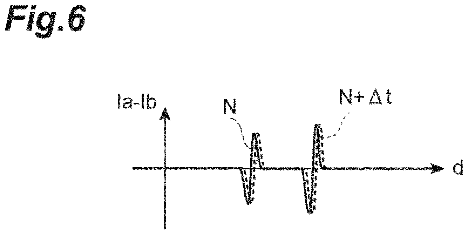

FIG. 6 is an explanatory diagram of a method for specifying a direction of the twist.

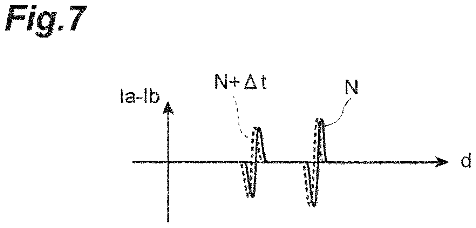

FIG. 7 is an explanatory diagram of the method of specifying a direction of the twist.

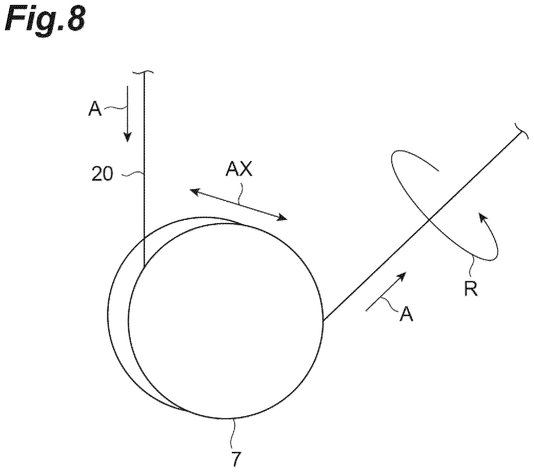

FIG. 8 is an explanatory diagram of the twist applying step.

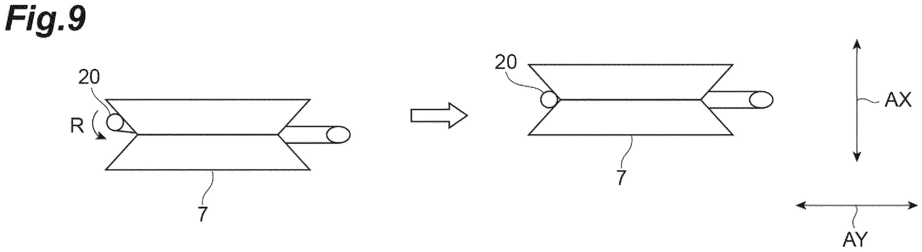

FIG. 9 is an explanatory diagram of the twist applying step.

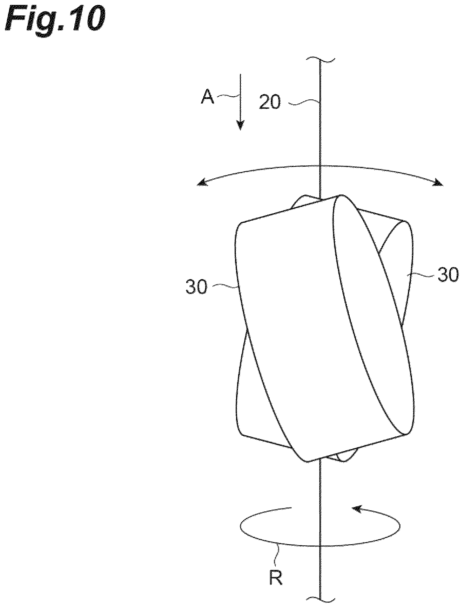

FIG. 10 is an explanatory diagram of the twist applying step according to a variation.

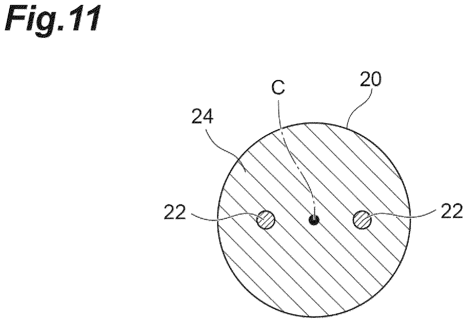

FIG. 11 is a sectional view of a multicore optical fiber.

### Description of Embodiments

### [Problems to be Solved by Present Disclosure]

In the method described in Patent Literature 1, the twist of the optical fiber being drawn cannot be measured.

An object of the present disclosure is to provide a method for measuring a twist of an optical fiber and a method for manufacturing an optical fiber capable of measuring the twist of an optical fiber being drawn.

### [Effects of Present Disclosure]

According to the present disclosure, it is possible to provide the method for measuring a twist of an optical fiber and the method for manufacturing an optical fiber capable of measuring the twist of the optical fiber being drawn.

### [Description of Embodiments of Present Disclosure]

Aspects of the present disclosure are first listed and described. A method for measuring a twist of an optical fiber according to an aspect of the present disclosure is a method for measuring the twist of an optical fiber being drawn. The method includes irradiating the optical fiber with light beams from a plurality of irradiation positions spaced apart along a traveling direction of the optical fiber; detecting intensity distributions of the light beams, with which the optical fiber is irradiated and which are transmitted through the optical fiber, at a plurality of detection positions corresponding to the plurality of irradiation positions; and calculating the twist of the optical fiber based on the intensity distributions which are detected.

In the method for measuring the twist of an optical fiber, since the intensity distributions of the light beams transmitted through the optical fiber are acquired by the light beams emitted from the plurality of irradiation positions spaced apart along the traveling direction of the optical fiber, the twist of the optical fiber being drawn can be measured.

In the detecting step, the intensity distributions along the radial direction of the optical fiber may be detected. In this case, the internal structure along the radial direction of the optical fiber can be examined.

In the detecting step, the intensity distributions of the light beams transmitted through the optical fiber and enlarged in the radial direction may be detected. In this case, the internal structure along the radial direction of the optical fiber can be examined in more detail.

The irradiating step is a step from when light beam is emitted from a light source to when the light beam strikes the optical fiber. In the irradiating step, light beams with which the optical fiber is irradiated may be polarized. The detecting step is a step from when the light beams transmitted through the optical fiber (including light beams refracted or scattered by the optical fiber) reaches detection positions to when the light beams are detected. In the detecting step, the light beams transmitted through the optical fiber may be polarized, and the intensity distributions of the polarized light beams may be detected. In this case, it is possible to obtain the intensity distributions in which a difference in light intensity is clarified. In order to polarize the light beams in the irradiating step, for example, light beams can be transmitted through a polarizing plate (polarizer). In order to polarize the light beams in the detecting step, for example, the light beams can be transmitted through the polarizing plate (analyzer).

In the detecting step, the light beams transmitted through the optical fiber may be differentially interfered, and the intensity distribution of the differentially interfered light beams may be detected. For example, in the irradiating step, the polarized light beams are divided into two polarized light beams by a differential interference prism, and the optical fiber is irradiated with the polarized light beams. Two polarized light beams transmitted through the optical fiber are combined in the same path by another differential interference prism to be differentially interfered. In this case, it is possible to obtain the intensity distribution in which a difference in light intensity is clarified.

In the calculating step, the twist of the optical fiber may be calculated based on the difference between the intensity distributions detected at the plurality of detection positions. In this case, for example, the twist of a core of a multicore optical fiber can be measured.

In the calculating step, the twist of the optical fiber may be calculated based on the difference between the intensity distributions detected at the same time at the plurality of detection positions. In this case, for example, the twist of the core of the multicore optical fiber can be more accurately measured.

The plurality of irradiation positions may be positions where azimuth angles around the central axis of the optical fiber are the same. In this case, since it is not necessary to correct the azimuth angles of the plurality of detected intensity distributions, it is possible to easily calculate the twist of the optical fiber.

A method for manufacturing an optical fiber according to an aspect of the present disclosure includes melting an optical fiber preform by heating to draw an optical fiber; measuring a twist of the optical fiber being drawn; and applying a twist that cancels the measured twist to the optical fiber being drawn. The measuring step includes irradiating the optical fiber with light beams from a plurality of irradiation positions spaced apart along a traveling direction of the optical fiber, detecting intensity distributions of light beams, with which the optical fiber is irradiated and which are transmitted through the optical fiber, at a plurality of detection positions corresponding to the plurality of irradiation positions, and calculating the twist of the optical fiber based on the intensity distributions which are detected.

In the method for manufacturing an optical fiber, since the intensity distributions of the light beams transmitted through the optical fiber are acquired by the light beams emitted from the plurality of irradiation positions spaced apart along the traveling direction of the optical fiber, the twist of the optical fiber being drawn can be measured. Since the twist that cancels the measured twist is applied to the optical fiber being drawn, the optical fiber in which the twist is suppressed can be manufactured.

The method may further include a step of applying a coating resin to the optical fiber by a die, and a step of taking up the optical fiber on which the coating resin is applied by a capstan. In the step of applying the twist that cancels the measured twist to the optical fiber being drawn, the twist may be applied to the optical fiber by adjusting a position or an angle of a guide roller disposed between the die and the capstan. In this case, the twist can be easily applied to the optical fiber.

### [Details of Embodiments of Present Disclosure]

Specific examples of a method for measuring a twist of an optical fiber and a method for manufacturing an optical fiber of the present disclosure will be described below with reference to the drawings. Note that, the present invention is not limited to these examples, but is indicated by the claims, and is intended to include all modifications within the meaning and scope equivalent to the claims. In the description of the drawings, the same elements are denoted by the same reference signs, and redundant description will be omitted.

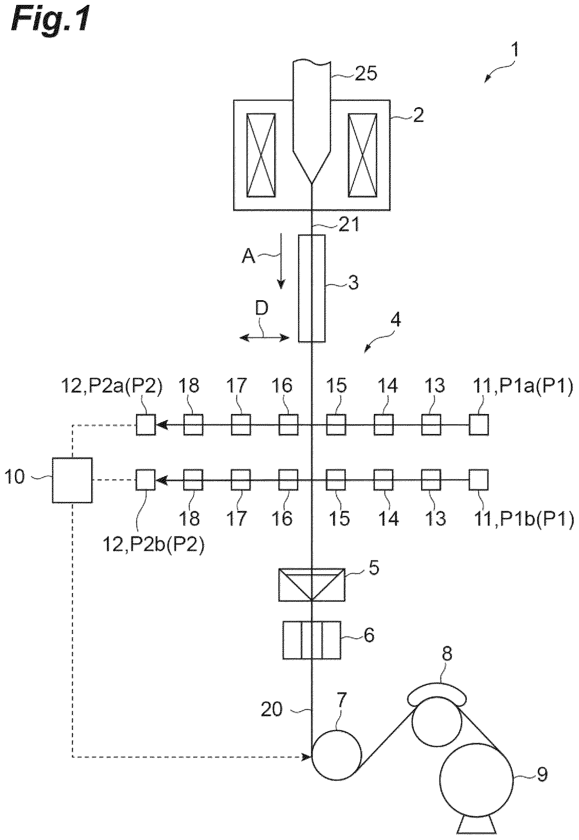

FIG. 1 is a schematic diagram of a manufacturing apparatus used in the method for manufacturing an optical fiber according to an embodiment. As illustrated in FIG. 1, a manufacturing apparatus 1 includes a heating furnace 2, a cooling device 3, a measurement unit 4, a die 5, a resin curing unit 6, a guide roller 7, a capstan 8, a winding drum 9, and a control unit 10.

An optical fiber 20 manufactured by manufacturing apparatus 1 has, for example, a circular section, and includes a refractive index change portion therein. Optical fiber 20 has a structure in which a positional degree of freedom of the refractive index change portion is present in an azimuth around a central axis. Examples of optical fiber 20 include a multicore optical fiber and a polarization-maintaining optical fiber. Optical fiber 20 may have a non-circular cross section instead of cylindrical symmetry.

Hereinafter, a polarization-maintaining optical fiber including one core 22 (see FIG. 4), a plurality of (two in the present embodiment) stress applying portions 23 (see FIG. 4), and a cladding 24 (see FIG. 4) will be described as an example. Core 22 includes a central axis C. Two stress applying portions 23 face each other with central axis C (see FIG. 4) interposed therebetween. Stress applying portion 23 and cladding 24 have different refractive indexes. Stress applying portion 23 is the refractive index change portion. Cladding 24 surrounds core 22 and the plurality of stress applying portions 23. In the present embodiment, optical fiber 20 includes a coating resin (not illustrated) that covers an outer surface of cladding 24. An optical fiber 21 before the coating resin is applied is made only of a glass fiber.

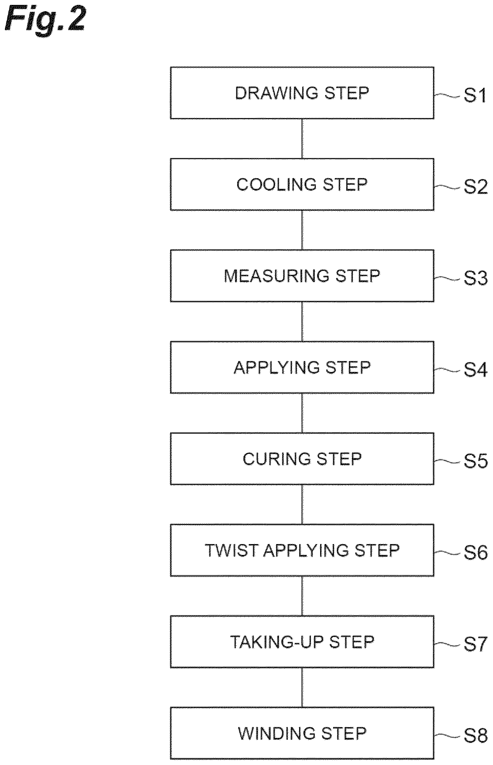

FIG. 2 is a flowchart illustrating the method for manufacturing an optical fiber according to the embodiment. As illustrated in FIG. 2, the method for manufacturing optical fiber 20 according to the embodiment includes drawing step S1, cooling step S2, measuring step S3, applying step S4, curing step S5, twist applying step S6, taking-up step S7, and winding step S8. Steps S1 to S8 are illustrated in the order in the case of focusing on a certain point of optical fiber 20 in a length direction. That is, a certain point of optical fiber 20 in the length direction is manufactured through steps S1 to S8 in order. The method for manufacturing optical fiber 20 according to the embodiment is a method for manufacturing optical fiber 20 by using a twist measurement method of optical fiber 21 for measuring the twist of optical fiber 21 being drawn online. The twist measurement method of optical fiber 21 includes measuring step S3.

Drawing step S1 is a step of melting an optical fiber preform 25 by heating to draw optical fiber 21. In drawing step S1, optical fiber preform 25 is heated by heating furnace 2. Optical fiber 21 is drawn downward in a vertical direction from a lower end of optical fiber preform 25 melted in heating furnace 2.

Cooling step S2 is a step of cooling drawn optical fiber 21. In cooling step S2, optical fiber 21 is cooled by cooling device 3. Cooling device 3 is provided downstream of heating furnace 2 in a traveling direction (moving direction) A of optical fiber 21. Traveling direction A coincides with an axial direction of optical fiber 21.

Measuring step S3 is a step of measuring the twist of optical fiber 21 being drawn. In measuring step S3, the twist around the axial direction of optical fiber 21 being drawn is measured online by measurement unit 4 and control unit 10. The method for manufacturing optical fiber 20 includes measuring step S3 in order to use the twist measurement method of optical fiber 21.

Measurement unit 4 includes a plurality of (two in the present embodiment) irradiation units 11, a plurality of (two in the present embodiment) detection units 12, a plurality of (two in the present embodiment) polarizing plates 13, a plurality of (two in the present embodiment) differential interference prisms 14, a plurality of (two in the present embodiment) condensers 15, a plurality of (two in the present embodiment) objective lenses 16, a plurality of (two in the present embodiment) differential interference prisms 17, and a plurality of (two in the present embodiment) polarizing plates 18.

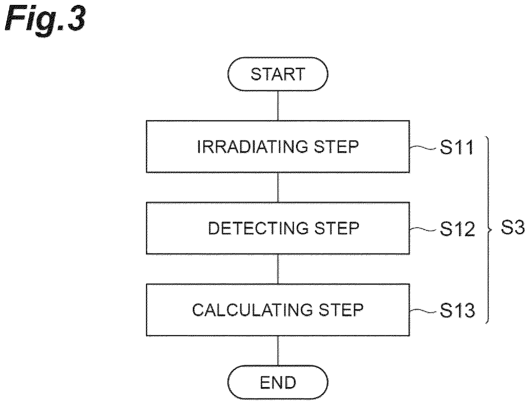

FIG. 3 is a flowchart illustrating the measuring step. FIG. 3 is a flowchart illustrating the method for measuring the twist of an optical fiber according to the embodiment. As illustrated in FIG. 3, measuring step S3 includes irradiating step S11, detecting step S12, and calculating step S13. Steps S11 to S13 are performed in this order.

Irradiating step S 11 is a step of irradiating a side surface of optical fiber 21 with light beams from a plurality of irradiation positions P1 spaced apart along traveling direction A. The plurality of irradiation positions P1 are provided, for example, between cooling device 3 and die 5 in traveling direction A of optical fiber 21. Irradiation positions P1 may be provided between heating furnace 2 and cooling device 3 (in this case, the order of cooling step S2 and measuring step S3 is changed from the order illustrated in FIG. 2). Irradiation units 11 that emit light beams are disposed at the plurality of irradiation positions P1. That is, the plurality of irradiation units 11 are disposed to be spaced apart from each other along traveling direction A. The plurality of irradiation units 11 have, for example, the same configuration.

In the present embodiment, the plurality of irradiation positions P1 include an irradiation position P1a and an irradiation position P1b. Irradiation position P1a is provided upstream of irradiation position P1b in traveling direction A of optical fiber 21. A separation distance in traveling direction A between two adjacent irradiation positions P1 is set to a length at which optical fiber 21 is not twisted by one or more turns. The separation distance is, for example, from 10 mm to 2000 mm. When the separation distance is less than 10 mm, since a rotation angle of the twist is small, there is a possibility that the twist cannot be detected. When the separation distance exceeds 2000 mm, optical fiber 21 may be twisted one or more turns.

The separation distance is set with reference to, for example, a result of manufacturing optical fiber 20 in advance in manufacturing apparatus 1 and measuring the twist of optical fiber 20 offline. Optical fiber 20 is twisted when the optical fiber comes into contact with each roller provided in manufacturing apparatus 1. Since an angle at which each roller comes into contact with optical fiber 20 differs for each roller, the twist applied to optical fiber 20 differs for each roller. The addition of these twists becomes the twist applied to optical fiber 20 by manufacturing apparatus 1. Manufacturing apparatus 1 has a substantially constant twist tendency.

The plurality of irradiation units 11 irradiate the side surface of optical fiber 21 with the light beams. It is preferable that the plurality of irradiation units 11 emit the light beams from the same direction, that is, optical paths of the light beams emitted from the plurality of irradiation units 11 overlap each other or completely coincide with each other as viewed from traveling direction A. In this preferable case, a plurality of line segments connecting the plurality of irradiation units 11 and central axis C of optical fiber 21 overlap each other or completely coincide with each other as viewed from traveling direction A. The plurality of irradiation positions P1 are positions where azimuth angles around central axis C of optical fiber 21 are the same. The plurality of irradiation units 11 irradiate the side surface of optical fiber 21 with the light beams in a direction orthogonal to traveling direction A.

In irradiating step S11, the light beams applied to optical fiber 21 are polarized by polarizing plates 13, and the polarized light beams are applied to optical fiber 21. The plurality of polarizing plates 13 are provided between the plurality of irradiation units 11 and optical fiber 21. Polarizing plate 13 is disposed on the optical path of the light emitted from corresponding irradiation unit 11. For example, the plurality of polarizing plates 13 have the same configuration.

In irradiating step S11, optical fiber 21 may be irradiated with the light beams transmitted through differential interference prisms 14. In irradiating step S11, optical fiber 21 may be irradiated with the light beams transmitted through condensers 15. Polarizing plates 13, differential interference prisms 14, and condensers 15 can be disposed in this order.

Detecting step S12 is a step of detecting intensity distributions of the light beams, with which optical fiber 21 is irradiated and which are transmitted through optical fiber 21, at a plurality of detection positions P2 corresponding to the plurality of irradiation positions P1. Detection units 12 that detect the intensity distributions of the transmitted light beams are disposed at the plurality of detection positions P2. The light beams with which optical fiber 21 is irradiated are refracted by the refractive index change portion. Thus, a position and a shape of the refractive index change portion are reflected in the intensity distribution of the transmitted light. According to the intensity distribution of the transmitted light beam, an internal structure of optical fiber 21 can be examined. Irradiation position P1 and corresponding detection position P2 can be point-symmetric with respect to central axis C in a section perpendicular to central axis C of optical fiber 21.

The intensity distribution is a distribution of light intensities (luminance) detected by detection unit 12, along a radial direction D of optical fiber 21. Radial direction D of optical fiber 21 is a direction orthogonal to traveling direction A. For example, a line sensor in which pixels for detecting light beams are linearly arranged or an area sensor in which pixels are two-dimensionally arranged is used as detection unit 12. In the case of the area sensor, for example, the intensity distribution along radial direction D can be obtained by extracting a signal of one pixel column arranged in radial direction D. The plurality of detection units 12 have, for example, the same configuration.

In the present embodiment, the plurality of detection positions P2 include a detection position P2a and a detection position P2b. Detection position P2a is provided upstream of detection position P2b in traveling direction A. The plurality of detection positions P2 are provided between cooling device 3 and die 5 in traveling direction A in FIG. 1. In a case where irradiation position P1 is provided between heating furnace 2 and cooling device 3, corresponding detection position P2 is also provided between heating furnace 2 and cooling device 3.

In detecting step S12, the light beams transmitted through optical fiber 21 are polarized by polarizing plates 18. Accordingly, detection unit 12 detects the intensity distribution of the polarized light beam. The plurality of polarizing plates 18 are disposed between optical fiber 21 and the plurality of detection units 12. Polarizing plate 18 is disposed on the optical path of the transmitted light incident on corresponding detection unit 12. The plurality of polarizing plates 18 have, for example, the same configuration.

In detecting step S12, for example, the light beams transmitted through optical fiber 21 are enlarged in radial direction D by objective lenses 16. Accordingly, detection unit 12 detects the intensity distribution of the light beam enlarged in radial direction D. The plurality of objective lenses 16 are disposed, for example, between optical fiber 21 and the plurality of detection units 12. Objective lens 16 is disposed on the optical path of the transmitted light incident on corresponding detection unit 12. The plurality of objective lenses 16 has, for example, the same configuration.

In detecting step S12, the light beams transmitted through optical fiber 21 are transmitted through objective lenses 16, differential interference prisms 17, and polarizing plates 18. The polarized light beams divided by differential interference prism 14 in irradiating step S11 are combined into the same path by differential interference prism 17 in detecting step S12. There is an optical path difference in the light beams divided when the light beams pass through optical fiber 20. Accordingly, differential interference occurs in the combined light beams. Detection unit 12 detects the intensity distribution of the differentially interfered light beams.

Calculating step S13 is a step of calculating the twist of optical fiber 20 by control unit 10 based on a plurality of detected intensity distributions. Control unit 10 is connected to communicate with the plurality of detection units 12 and guide roller 7. Control unit 10 receives the plurality of intensity distributions from the plurality of detection units 12, and calculates the twist. As a result, the twist of optical fiber 21 is measured.

In calculating step S13, control unit 10 calculates the twist of optical fiber 20 based on a difference between the intensity distributions detected at the plurality of detection positions P2. In calculating step S13, the twist of optical fiber 20 is calculated based on a difference between the intensity distributions detected at the same time at the plurality of detection positions P2. The same time is not limited to completely the same time, and may include a predetermined time difference. When v (m/sec) is a drawing speed of optical fiber 21 and L (m) is a separation distance in traveling direction A between two adjacent irradiation positions P1, this time difference is, for example, L/v (seconds) or less.

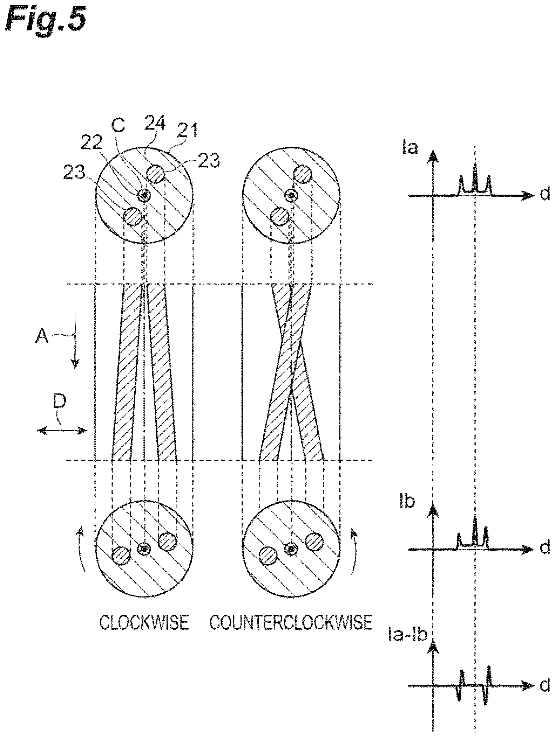

FIGS. 4 and 5 are explanatory diagrams of the calculating step. FIG. 4 illustrates an example in which optical fiber 21 is not twisted. FIG. 5 illustrates examples of a case where a clockwise twist is applied to optical fiber 21 and a case where a counterclockwise twist is applied as viewed from traveling direction A. In FIGS. 4 and 5, a sectional view along traveling direction A of optical fiber 21 and a sectional view orthogonal to traveling direction A of optical fiber 21 are illustrated. Optical fiber 21 is formed such that a twist of less than one turn can be specified by the intensity distribution. For example, a marker (not illustrated) may be provided in optical fiber 21, or shapes and positions of two stress applying portions 23 may be different from each other.

In FIGS. 4 and 5, the intensity distribution detected at detection position P2a is illustrated with an intensity Ia of the light beam detected at detection position P2a as a vertical axis and a radial position d as a horizontal axis. The intensity distribution detected at detection position P2b is illustrated with an intensity Ib of the light beam detected at detection position P2b as the vertical axis and radial position d as the horizontal axis. A difference between the intensity distribution detected at detection position P2a and the intensity distribution detected at detection position P2b is illustrated with a difference Ia - Ib between intensity Ia and intensity Ib as the vertical axis and radial position d as the horizontal axis. Although a simplified intensity distribution is illustrated here with three peaks, an actual intensity distribution is a combination of more than one peak.

As illustrated in FIG. 4, in a case where optical fiber 21 is not twisted, the position of stress applying portion 23 does not change. Thus, the intensity distribution detected at detection position P2a and the intensity distribution detected at detection position P2b are equal to each other. Accordingly, the difference between the intensity distributions is zero. That is, the difference Ia - Ib is zero over entire radial position d.

As illustrated in FIG. 5, in a case where optical fiber 21 has a predetermined twist, the position of stress applying portion 23 changes. Thus, the intensity distribution detected at detection position P2a and the intensity distribution detected at detection position P2b are different from each other. Accordingly, the difference between the intensity distributions is not zero. Therefore, in a case where the difference in the intensity distribution is not zero, it can be confirmed that optical fiber 21 is twisted. A correlation between a degree of the twist of optical fiber 21 and a shape of a radial distribution of the difference Ia - Ib is examined in advance, and thus, control unit 10 can calculate the twist based on the shape of the radial distribution of the difference Ia - Ib. The twist is indicated by, for example, a variation amount of the azimuth angle around central axis C per unit length of optical fiber 20. A unit of the twist in this case is, for example, deg/mm.

In the example of FIG. 5, the radial distribution of the difference Ia - Ib is equal between a case where the clockwise twist is applied and the case where the counterclockwise twist is applied. Accordingly, when only the difference in the intensity distribution is viewed, there are two possible cases of the clockwise twist and the counterclockwise twist.

A section of manufactured optical fiber 20 is intermittently observed at short intervals in the length direction, and thus, a direction and a cycle of the twist can be known. The cycle of the twist of optical fiber 20 is roughly determined by manufacturing conditions of optical fiber 20. Accordingly, in a case where the cycle of the twist of the optical fiber manufactured before is known, for optical fiber 20 manufactured under a similar condition, the direction of the twist of optical fiber 20 can be estimated by comparing an interval between detection position P2a and detection position P2b with the cycle of the twist of optical fiber 20 manufactured before.

FIGS. 6 and 7 are explanatory diagrams of a method for specifying the direction of the twist. FIG. 6 illustrates an example in which the counterclockwise twist is applied to optical fiber 21, and FIG. 7 illustrates an example in which the clockwise twist is applied to optical fiber 21. FIGS. 6 and 7 illustrate a radial distribution of the difference Ia - Ib at a certain time N and a radial distribution of the difference Ia - Ib at a time N + Δt after a lapse of a predetermined time Δt from time N. As illustrated in FIGS. 6 and 7, the radial distribution of the difference Ia - Ib changes in an opposite orientation along the radial direction in accordance with the direction of the twist applied to optical fiber 21. The twist of the optical fiber and the intensity distribution of the light beam transmitted through the optical fiber at each position are measured at minute intervals by using the optical fiber in which the twist has occurred as a sample, and a relationship between the twist and the intensity distribution of the light beam transmitted through the optical fiber is determined in advance. Accordingly, the direction of the twist can be specified by how the radial distribution of the difference Ia - Ib changes in a predetermined time Δt.

Control unit 10 performs feedback control on guide roller 7 based on the calculation result. Specifically, control unit 10 transmits a control signal corresponding to the calculation result to guide roller 7. The feedback control will be described later.

For example, control unit 10 may be a computer system including a processor such as a central processing unit (CPU), memories such as a random access memory (RAM) and a read only memory (ROM), input and output devices such as a touch panel, a mouse, a keyboard, and a display, and a communication device such as a network card. Control unit 10 implements a function of control unit 10 by operating each hardware under the control of the processor based on a computer program stored in the memory.

Applying step S4 is a step of applying the coating resin to a surface of optical fiber 21 by die 5. Die 5 is provided, for example, downstream of cooling device 3 in traveling direction A. Die 5 is a metal jig having a hole for passing optical fiber 21 in a center. Die 5 holds a liquid coating resin, and applies the coating resin to the surface of optical fiber 21 passing through the hole. In the present embodiment, the coating resin is an ultraviolet curable resin.

Curing step S5 is a step of curing the coating resin on the surface of optical fiber 21 by resin curing unit 6. Resin curing unit 6 is provided downstream of die 5 in traveling direction A. Resin curing unit 6 cures the coating resin applied to the surface of optical fiber 21. As a result, optical fiber 20 including the coating resin is formed. In the present embodiment, resin curing unit 6 is an ultraviolet irradiation device, and cures the coating resin by irradiating the coating resin with ultraviolet rays.

Twist applying step S6 is a step of applying the twist that cancels the twist measured in measuring step S3 to optical fiber 20 being drawn by guide roller 7, for example. Guide roller 7 is provided downstream of resin curing unit 6 in traveling direction A. Guide roller 7 is disposed between die 5 and capstan 8 in traveling direction A. In the present embodiment, guide roller 7 is disposed between resin curing unit 6 and capstan 8 in traveling direction A. Guide roller 7 is a direct roller disposed immediately below optical fiber preform 25 in the vertical direction. Guide roller 7 abuts on optical fiber 20 and changes traveling direction A of optical fiber 20 from the vertical direction to a direction different from the vertical direction. Note that, the "The twist that cancels the twist measured in measuring step S3" is a twist having the same degree in an opposite direction to the twist measured in measuring step S3, and is not limited to a twist that completely cancels the twist measured in measuring step S3, and may be a twist that almost or substantially cancels the twist measured in measuring step S3.

FIGS. 8 and 9 are explanatory diagrams of the twist applying step. FIG. 8 is a perspective view of guide roller 7. FIG. 9 illustrates a diagram of guide roller 7 as viewed from the upstream side in traveling direction A (resin curing unit 6 side). As illustrated in FIGS. 8 and 9, guide roller 7 is configured to be movable in an axial direction AX of guide roller 7. Guide roller 7 is disposed such that axial direction AX is orthogonal to the vertical direction.

In a left diagram of an arrow in FIG. 9, optical fiber 20 comes into contact with a left side of guide roller 7, is wound around guide roller 7, and is positioned in a groove on a right side of guide roller 7. As illustrated on the left diagram of the arrow in FIG. 9, when a position where optical fiber 20 comes into contact with guide roller 7 on the left side of guide roller 7 is not a groove, the traveling direction of optical fiber 20 can be changed to fit in the groove while coming into contact with guide roller 7. At this time, a rotational force R for rotating optical fiber 20 is applied to the optical fiber, and optical fiber 20 is twisted.

The twist of optical fiber 20 is transmitted to a molten portion of optical fiber preform 25. As a result, the twist is also applied to optical fiber 21 that has just been drawn from the molten portion. The twist (residual twist) applied before cooling and solidification is different from twist applied after cooling and solidification, and does not return to an original optical fiber after manufacturing. Thus, it is necessary to measure a twist during drawing and to suppress application of the twist. Drawn optical fiber 21 is already solidified at an inlet of cooling device 3. In guide roller 7, the twist of optical fiber 20 is suppressed by changing the position of optical fiber 20 entering guide roller 7.

Guide roller 7 may move in axial direction AX and a direction AY orthogonal to axial direction AX. Alternatively, guide roller 7 may change axial direction AX with respect to a direction (horizontal direction) orthogonal to the vertical direction. An angle of a rotation axis of guide roller 7 is adjusted, and thus, a position where optical fiber 20 first comes into contact with guide roller 7 (position on guide roller 7) may be changed to suppress the twist of optical fiber 20.

An orientation and magnitude of rotational force R applied to optical fiber 21 by guide roller 7 can be adjusted by, for example, a position of guide roller 7 in axial direction AX. For example, as illustrated in FIG. 9, in the left diagram, the position where optical fiber 20 first comes into contact with guide roller 7 is not the groove, but optical fiber 20 is rotated and twisted on guide roller 7 while optical fiber 20 is guided to the groove of guide roller 7. As illustrated on the right side of FIG. 9, when guide roller 7 is moved and the position where optical fiber 20 first comes into contact with guide roller 7 is the groove, optical fiber 20 is not twisted.

Control unit 10 transmits the control signal based on the calculation result to guide roller 7, adjusts the position and inclination of guide roller 7 in axial direction AX, and cancels the twist of optical fiber 20. That is, the feedback control of the twist with respect to guide roller 7 is performed.

Taking-up step S7 is a step of taking up optical fiber 20 by capstan 8. Capstan 8 is provided downstream of guide roller 7 in traveling direction A.

Winding step S8 is a step of winding optical fiber 20 by winding drum 9. Winding drum 9 is provided downstream of capstan 8 in traveling direction A.

FIG. 10 is an explanatory diagram of a twist applying step according to a variation. In twist applying step S6 according to the variation, the twist is applied to optical fiber 20 not by adjusting the angle of guide roller 7 (see FIG. 1) but by adjusting angles of a pair of guide rollers 30. The pair of guide rollers 30 is disposed between die 5 and guide roller 7 in traveling direction A. In the present embodiment, the pair of guide rollers 30 is disposed between resin curing unit 6 and guide roller 7 in traveling direction A, but may be disposed between guide roller 7 and capstan 8.

The pair of guide rollers 30 faces each other with optical fiber 20 interposed therebetween. The pair of guide rollers 30 is configured to be inclined in opposite directions to each other with respect to traveling direction A. The pair of guide rollers 30 is inclined, and thus, rotational force R about central axis C is applied to optical fiber 20. As a result, the twist is applied to optical fiber 20 and optical fiber 21.

The orientation and magnitude of rotational force R applied from the pair of guide rollers 30 to optical fiber 21 can be adjusted by the angle of guide rollers 30, that is, an angle between the surface perpendicular to the axial direction of guide roller 30 and traveling direction A. Therefore, control unit 10 performs the feedback control on the pair of guide rollers 30 by transmitting the control signal based on the calculation result to the pair of guide rollers 30 and adjusting the angles of the pair of guide rollers 30.

As described above, in the twist measurement method according to the embodiment, since the intensity distributions of the light beams transmitted through optical fiber 21 are acquired by the light beams emitted from the plurality of irradiation positions P1 spaced apart along traveling direction A, the twist of optical fiber 21 being drawn can be measured. The twist of optical fiber 21 can also be measured by a method for acquiring a plurality of intensity distributions at different times at one position. However, in this method, it is not possible to separately measure the twist (residual twist) applied before cooling and solidification and the twist applied after cooling and solidification. In contrast, in the measurement method according to the embodiment, the twist (residual twist) applied before cooling and solidification can be separately measured by the difference Ia - Ib between the intensity distributions detected at the plurality of detection positions P2. For example, the intensity distribution detected at detection position P2a at time T is compared with the intensity distribution detected at detection position P2b at same time T. When the intensity distributions are the same, there is no residual twist in optical fiber 20. When the intensity distributions are different from each other, there is the residual twist in optical fiber 20.

In the manufacturing method according to the embodiment, since the intensity distributions of the light beams transmitted through optical fiber 21 are acquired by the light beams emitted from the plurality of irradiation positions P1 spaced apart along traveling direction A in measuring step S3, the twist of optical fiber 21 being drawn can be measured. Since the twist that cancels the twist measured in measuring step S3 is applied to optical fiber 20 being drawn in twist applying step S6, it is possible to manufacture optical fiber 20 in which the twist is suppressed. In particular, here, it is possible to manufacture optical fiber 20 in which the twist applied before cooling and solidification is suppressed.

Although the polarization-maintaining optical fiber has been described above as an example, optical fiber 20 may be a multicore optical fiber. In this case, as illustrated in FIG. 11, optical fiber 20 includes the plurality of (here, two) cores 22 and cladding 24 surrounding core 22. Core 22 is the refractive index change portion and corresponds to stress applying portion 23 (see FIG. 4) of the above-described example. In the case of a multicore optical fiber, a marker (not illustrated) is formed in cladding 24. Similarly to core 22 and stress applying portion 23, the marker is a portion having a refractive index different from cladding 24. Therefore, the twist of optical fiber 20 can be observed as the twist of the marker.

Since the twist is suppressed in optical fiber 20, a connection loss can be reduced. For example, in the multicore optical fiber, even though positions of core axes are aligned at one end in the length direction, a problem that the positions of the core axes are deviated at the other end, and a problem that the positions of the core axes are deviated since the position of optical fiber 20 in a longitudinal direction is changed by polishing a fiber end face can be solved. Similarly, in the polarization-maintaining optical fiber, it is possible to solve a problem that a polarization plane at an incidence end and a polarization plane at an emission end are misaligned.

Although the embodiment and the variation have been described above, the present disclosure is not necessarily limited to the above-described embodiment and variation, and various modifications can be made without departing from the gist thereof.

The coating resin of optical fiber 20 may have two or more layers. In this case, for example, manufacturing apparatus 1 may include two or more sets of die 5 and resin curing unit 6, and in the method for manufacturing optical fiber 20, the applying step and the curing step may be repeated twice or more.

The above-described embodiment and variation may be appropriately combined.

### Reference Signs List

- 1: manufacturing apparatus
- 2: heating furnace
- 3: cooling device
- 4: measurement unit
- 5: die
- 6: resin curing unit
- 7: guide roller
- 8: capstan
- 9: winding drum
- 10: control unit
- 11: irradiation unit
- 12: detection unit
- 13: polarizing plate
- 14: differential interference prism
- 15: condenser
- 16: objective lens
- 17: differential interference prism
- 18: polarizing plate
- 20: optical fiber (after coating)
- 21: optical fiber (glass fiber)
- 22: core
- 23: stress applying portion
- 24: cladding
- 25: optical fiber preform
- A: traveling direction
- AX: axial direction
- AY: direction orthogonal to axial direction
- C: central axis
- D: radial direction
- d: radial position
- Ia: intensity of light beam
- Ib: intensity of light beam
- N: time
- P1a: irradiation position
- P1b: irradiation position
- P2a: detection position
- P2b: detection position
- R: rotational force
- Δt: predetermined time

## Claims

1. A method for measuring a twist of an optical fiber being drawn, the method comprising:
irradiating the optical fiber with light beams from a plurality of irradiation positions spaced apart along a traveling direction of the optical fiber;
detecting intensity distributions of the light beams, with which the optical fiber is irradiated and which are transmitted through the optical fiber, at a plurality of detection positions corresponding to the plurality of irradiation positions; and
calculating the twist of the optical fiber based on the intensity distributions which are detected.

2. The method for measuring the twist of the optical fiber according to claim 1, wherein
in the detecting step, the intensity distributions along a radial direction of the optical fiber are detected.

3. The method for measuring the twist of the optical fiber according to claim 2, wherein
in the detecting step, the intensity distributions of light beams transmitted through the optical fiber and enlarged in the radial direction are detected.

4. The method for measuring the twist of the optical fiber according to any one of claims 1 to 3, wherein
in the irradiating step, the light beams with which the optical fiber is irradiated are polarized, and
in the detecting step, the light beams transmitted through the optical fiber are polarized, and the intensity distributions of the polarized light beams are detected.

5. The method for measuring the twist of the optical fiber according to any one of claims 1 to 4, wherein
in the detecting step, the light beams transmitted through the optical fiber are differentially interfered.

6. The method for measuring the twist of the optical fiber according to any one of claims 1 to 5, wherein
in the calculating step, the twist of the optical fiber is calculated based on a difference between the intensity distributions detected at the plurality of detection positions.

7. The method for measuring the twist of the optical fiber according to claim 6, wherein
in the calculating step, the twist of the optical fiber is calculated based on a difference between intensity distributions detected at the same time at the plurality of detection positions.

8. The method for measuring the twist of the optical fiber according to any one of claims 1 to 7, wherein
the plurality of irradiation positions are positions where azimuth angles around a central axis of the optical fiber are the same.

9. A method for manufacturing an optical fiber comprising:
melting an optical fiber preform by heating to draw an optical fiber;
measuring a twist of the optical fiber being drawn; and
applying a twist that cancels the measured twist to the optical fiber being drawn, wherein
the measuring step includes
irradiating the optical fiber with light beams from a plurality of irradiation positions spaced apart along a traveling direction of the optical fiber,
detecting intensity distributions of light beams, with which the optical fiber is irradiated and which are transmitted through the optical fiber, at a plurality of detection positions corresponding to the plurality of irradiation positions, and
calculating the twist of the optical fiber based on the intensity distributions which are detected.

10. The method for manufacturing the optical fiber according to claim 9, further comprising:
applying a coating resin to the optical fiber by a die; and
taking up the optical fiber on which the coating resin is applied by a capstan, wherein
in the applying step, the twist is applied to the optical fiber by adjusting a position or an angle of a guide roller disposed between the die and the capstan.
